# FASCICULE DE BREVET EUROPEEN

(11) **EP 4 291 804 B1**
(45) Date de publication et mention de la délivrance du brevet: **23.10.2024**
(21) Numéro de dépôt: 22722775.8
(22) Date de dépôt: 13.04.2022
(51) Int. Cl.: F16G 3/10

(54) **MÉTHODE DE JONCTION DES EXTRÉMITÉS D'UNE BANDE LINÉAIRE AFIN DE FORMER UNE BANDE SANS FIN POUR LE TRANSPORT DE DENRÉES ALIMENTAIRES**
VERFAHREN ZUM VERBINDEN DER ENDEN EINES LINEARBANDES ZU EINEM ENDLOSBAND FÜR DEN TRANSPORT VON LEBENSMITTELN
METHOD FOR JOINING THE ENDS OF A LINEAR BELT IN ORDER TO FORM AN ENDLESS BELT FOR THE TRANSPORT OF FOODSTUFFS

(30) Priorité: 20.04.2021 EP 21040710
(43) Date de publication de la demande: 20.12.2023
(73) Titulaire: Liftvrac, 44140 Geneston (FR)
(72) Inventeur: LASNE, Régis, 44140 GENESTON (FR); RIOT, François, 44140 GENESTON (FR)
(74) Mandataire: Argyma
(86) Numéro de dépôt international: PCT/EP2022/059949
(87) Numéro de publication internationale: WO 2022/223416

(56) Documents cités:
- FR-A- 1 154 067
- FR-A- 1 165 278
- FR-A1- 3 092 573
- JP-A- S6 065 936
- JP-A- S60 210 433

## Description

### Domaine technique

La présente invention concerne le domaine du transport de denrées alimentaires et plus particulièrement une méthode de jonction des extrémités d'une bande linéaire afin de former une bande sans fin pour le transport de denrées alimentaires.

De manière connue, en référence à la [Fig.1], on connaît par la demande de brevet FR3092573 un convoyeur 1 utilisé pour transporter des denrées alimentaires d'un niveau inférieur à un niveau supérieur au moyen d'une bande de transport sans fin BSF. Le convoyeur 1 comporte de manière classique une entrée basse 1A, une partie ascendante 1B et une sortie haute 1C. Un tel convoyeur 1 est particulièrement avantageux dans le domaine de l'industrie agro-alimentaire et peut être intégré au sein d'une ligne de fabrication, de traitement ou d'emballage, par exemple pour des produits en vrac tels que de la viande hachée, des poissons ou morceaux de poissons, des légumes, du fromage râpé, etc. La demande de brevet FR3092573 montre les caractéristiques du préambule de la revendication 1.

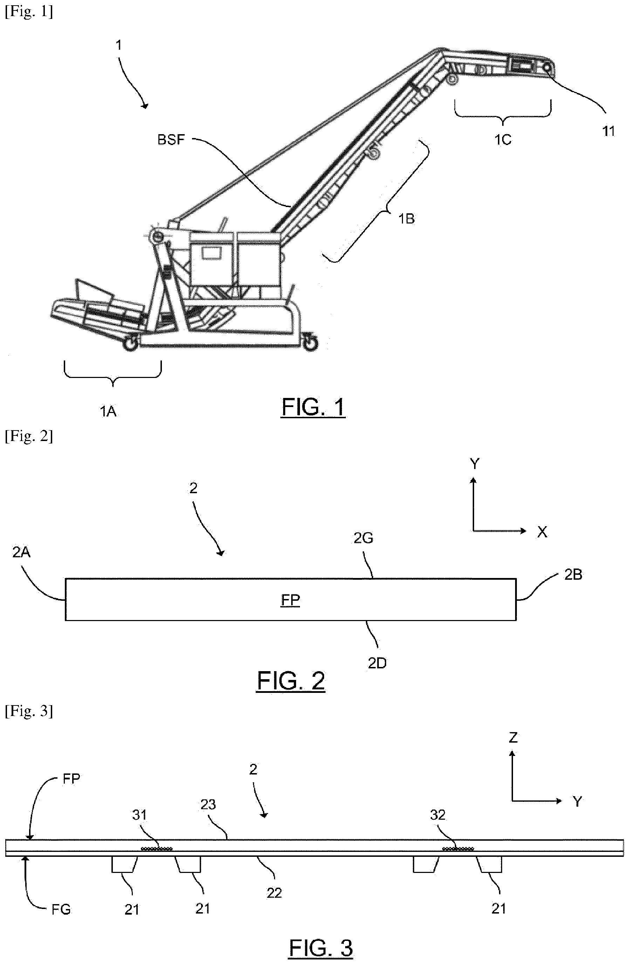

De manière connue, en référence aux figures 2 et 3, la bande sans fin BSF est obtenue à partir d'une bande linéaire 2 qui s'étend longitudinalement selon un axe X, latéralement selon un axe Y et verticalement selon un axe Z. La bande linéaire 2 comporte deux bords latéraux 2G, 2D et deux extrémités 2A, 2B qui sont solidarisées pour former une boucle (bande sans fin BSF).

Comme illustré à la [Fig.3], la bande linéaire 2 comprend de manière connue une face de dessus, désignée « face produit » FP, destinée à être en contact avec les denrées alimentaires, et une face de dessous, dite « face d'entraînement » FG, destinée à être en contact avec des organes d'entraînement 11 du convoyeur 1 ([Fig.1]). A cet effet, la face d'entraînement FG comporte des dents 21 pour coopérer avec les organes d'entraînement 11 du convoyeur 1.

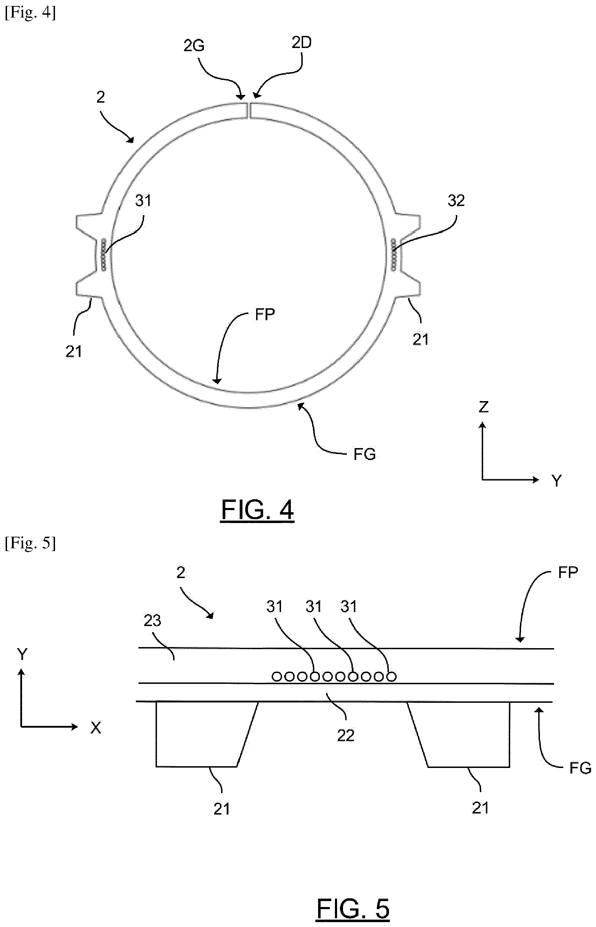

De manière connue, la bande linéaire 2 est déformable transversalement entre une position plane ([Fig.3]) et une position tubulaire ([Fig.4]). La bande linéaire 2 est généralement en position quasi plane lors de la réception de denrées alimentaires en entrée basse 1A du convoyeur 1 et lors de leur distribution en sortie haute 1C du convoyeur 1. Sur la partie ascendant 1B du convoyeur 1, la bande linéaire 2 est en position tubulaire pour limiterles pertes de denrées alimentaires et permettre leur ascension.

En référence aux figures 2 et 3, afin de permettre une déformation tubulaire optimale, la bande linéaire 2 comporte au moins deux couches superposées 22, 23 ayant des duretés différentes. La face produit FP appartient de manière connue à une couche supérieure 23 formée dans un matériau présentant une dureté faible, lui conférant une bonne adhérence, ce qui est favorable au transport de produits et à son nettoyage. Le matériau est de préférence souple pour former plus aisément la bande linéaire 2 dans sa configuration tubulaire, sans introduire des contraintes trop importantes dans la bande linéaire 2. La face d'entraînement FG appartient de manière connue à une couche inférieure 22 formée dans un matériau présentant une dureté plus élevée et donc un coefficient de frottement plus faible, de manière à augmenter sa durée de vie en limitant les frottements lors de sa coopération avec les glissières de guidage du convoyeur 1.

De plus, comme représenté aux figures 3 et 4, pour reprendre de manière optimale les efforts longitudinaux lors de son entrainement, la bande linéaire 2 intègre dans son épaisseur une pluralité d'organes de renfort longitudinaux 31, 32 (câbles, sangles plates, etc.). En pratique, en référence à la [Fig.5], les organes de renfort 31 sont intégrés à la couche supérieure 23, c'est-à-dire, du côté de la face produit FP. Une telle bande linéaire 2 possède des performances élevées. Lorsque la bande linéaire 2 comporte trois couches, les organes de renfort 31 peuvent être intégrés dans la couche intermédiaire.

Comme présenté précédemment, pour fabriquer une bande sans fin BSF, on dispose d'une bande linéaire 2 qui est, de préférence, conditionnée en rouleau. Une longueur de bande linéaire 2 est découpée et les extrémités 2A, 2B de la bande linéaire 2 sont jointes au niveau d'une zone de jonction afin de former la bande sans fin BSF, c'est-à-dire, annulaire.

Une telle jonction est critique étant donné qu'elle est susceptible de former un point de faiblesse réduisant la durée de vie de la bande sans fin BSF. Une des difficultés principales est d'assurer une continuité des organes de renfort 31, 32 au niveau de la zone de jonction.

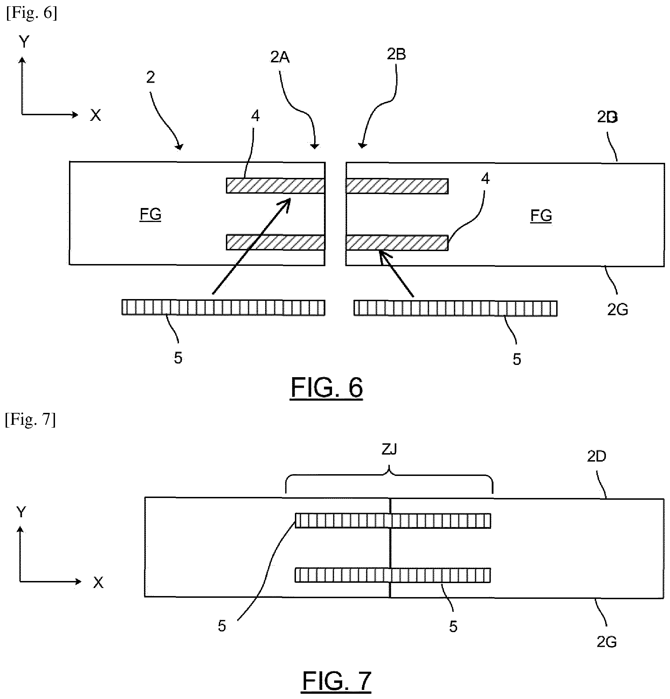

Dans l'art antérieur, pour réaliser une jonction, les deux extrémités 2A, 2B de la bande linéaire 2 sont jointes et des éléments de liaison 5 sont ajoutés pour joindre les deux extrémités 2A, 2B comme illustré à la [Fig.6]. Les éléments de liaison 5 doivent être intégrés dans l'épaisseur de la bande linéaire 2 pour ne pas créer de relief sur une des faces FG, FP de la bande linéaire 2, en particulier, sur la face produit FP qui doit demeurer parfaitement lisse pour permettre un nettoyage optimal.

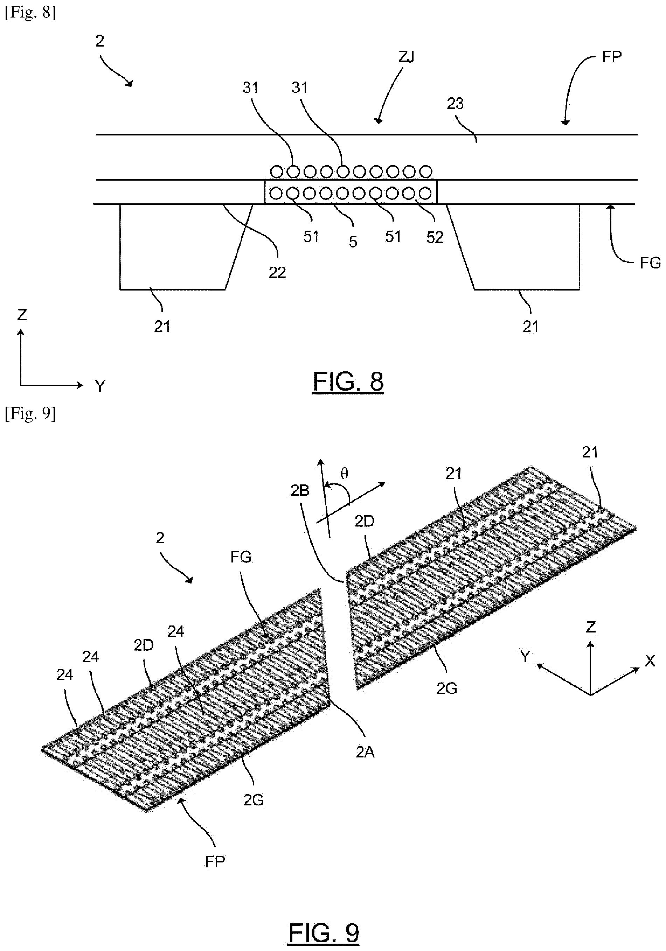

Aussi, comme illustré aux figures 6 et 7, il a été proposé de former des évidements 4 dans la face d'entraînement FG, de dureté élevée, pour atteindre les organes de renfort existants 31, 32 et de leur adjoindre les éléments de liaison 5 afin d'assurer l'interface. Comme illustré à la [Fig.8], les éléments de liaison 5 comprennent des organes de renfort complémentaires 51 qui sont noyés dans un matériau de dureté élevée 52 afin d'assurer une continuité avec la couche inférieure 22 de dureté élevée.

Une telle méthode permet de protéger la face produit FP qui demeure lisse. De plus, une telle méthode est simple à mettre en oeuvre étant donné que la face d'entraînement FG est formée dans la couche inférieure 22 de dureté élevée qui est, par nature, simple à usiner, ce qui facilite la formation des évidements 4.

En outre, les organes de renfort 31, 32 sont situés à proximité de la face d'entraînement FG et les évidements 4 possèdent avantageusement une profondeur réduite, ce qui réduit le temps de formation des évidements 4. En référence aux figures 7 et 8, lorsque la jonction est réalisée, la bande linéaire 2 comporte, au niveau de sa zone de jonction ZJ, une superposition d'organes de renfort 31 et d'organes de renfort complémentaires 51.

Une telle méthode de jonction présente néanmoins plusieurs inconvénients. L'accès aux organes de renfort 31, 32 est difficile étant donné qu'ils sont généralement formés à proximité de dents 21 de la face d'entraînement FG comme illustré à la [Fig.5], ce qui complique le travail de l'opérateur. De plus, la largeur des évidements 4 est contrainte par l'écartement entre les dents 21. Il n'est parfois pas possible de découvrir de manière optimale tous les organes de renfort 31. Une solution immédiate pour éliminer cet inconvénient serait de déplacer les dents 21 mais cela impliquerait de modifier le convoyeur 1 sur lequel est monté la bande sans fin BSF, ce qui n'est pas envisageable. Une autre solution immédiate serait de déplacer les organes de renfort 31, 32 à distance des dents 21 mais ceux-ci sont positionnés de manière optimale pour reprendre les efforts longitudinaux de la bande sans fin BSF en particulier en position tubulaire.

Outre les inconvénients liés aux dents 21, lorsque la bande sans fin BSF est en position tubulaire, les éléments de liaison 5 subissent des efforts d'arrachement importants et sont susceptibles de se cintrer, ce qui peut entrainer leur détachement et une rupture de la jonction.

On connaît également des demandes de brevet FR1154067A et FR1165278A des méthodes d'assemblage des bords d'une bande linéaire, dans lesquelles la jonction des extrémités est réalisée respectivement par l'application d'un ruban adhésif et par vulcanisation.

Un des objets de l'invention est de proposer une nouvelle méthode de jonction des extrémités d'une bande linéaire afin de former une jonction qui soit robuste et simple à réaliser.

### PRESENTATION DE L'INVENTION

L'invention concerne une méthode de jonction des extrémités longitudinales d'une bande linéaire afin de former une bande sans fin configurée pour être montée dans un convoyeur de transport ascendant de denrées alimentaires, la bande linéaire comprenant deux bords latéraux, deux extrémités longitudinales, une face de dessus destinée à recevoir des denrées alimentaires à transporter, désignée par la suite face produit, et une face de dessous opposée, destinée à coopérer avec des moyens d'entraînement du convoyeur, désignée par la suite face d'entraînement, la bande linéaire étant déformable transversalement entre une configuration plane, au repos, et une configuration tubulaire ou au moins sensiblement tubulaire, dans laquelle les deux bords latéraux sont positionnés bord à bord, la bande linéaire comprenant une couche supérieure réalisée en un matériau présentant une première dureté et formant ladite face produit, et une couche inférieure réalisée en un matériau présentant une deuxième dureté, supérieure à la première dureté, et formant ladite face d'entraînement, la bande linéaire comprenant une pluralité d'organes de renfort longitudinaux, disposés dans son épaisseur, adaptés pour limiter son allongement longitudinal au cours de son utilisation, méthode de jonction comprenant des étapes de :
- Solidarisation des extrémités longitudinales de la bande linéaire,
- Formation d'au moins un évidement dans la première extrémité longitudinale et dans la deuxième extrémité longitudinale de la bande linéaire de manière à découvrir au moins un organe de renfort,
- Solidarisation d'un élément de liaison dans l'évidement, l'élément de liaison comportant des organes de renfort complémentaires et étant de forme complémentaire audit évidement,

La méthode est remarquable par le fait que l'évidement est formé depuis la face produit de la bande linéaire.

Une telle méthode de jonction va à l'encontre d'un préjugé établi qui imposait la formation d'évidements depuis la face d'entraînement qui était plus simple et moins profonde à usiner. Grâce à la formation d'évidements depuis la face produit, la tenue des éléments de liaison au cours du temps est améliorée et les contraintes liées à la face d'entraînement, notamment liées aux dents, ne sont plus présentes. La durée de vie de la bande sans fin est améliorée.

De préférence, les extrémités longitudinales sont biseautées, de préférence, d'un angle de biseautage compris entre 30° et 60°. Un tel angle de biseau permet de répartir les efforts liés à la jonction sur une zone de jonction longitudinale plus importante, ce qui améliore la durée de vie de la bande sans fin.

De manière préférée, l'élément de liaison est solidarisé audit évidement par chauffage. Un chauffage de l'élément de liaison permet à ce dernier de fusionner avec le matériau de la couche supérieure, garantissant une liaison robuste et optimale.

Selon un aspect préféré, la méthode comprend une étape de pression de l'élément de liaison dans ledit évidement postérieure à l'étape de chauffage. La fusion est ainsi contrôlée tout en formant un état de surface parfaitement lisse pour la face produit.

De préférence, les organes de renfort longitudinaux sont positionnés dans la couche supérieure. Ainsi, les organes de renfort longitudinaux complémentaires permettent d'assurer une reprise des efforts optimale.

De préférence, l'élément de liaison comporte des organes de renfort complémentaires noyés dans un matériau analogue à celui de la couche supérieure. Ainsi, la fusion entre matériaux homogènes permet une liaison robuste.

De préférence, la bande linéaire comporte au moins deux groupes d'organes de renfort longitudinaux, de préférence, uniquement deux. De manière préférée, la méthode comporte une étape de formation de deux évidements pour découvrir les deux groupes d'organes de renfort longitudinaux.

De préférence, l'élément de liaison possède une longueur comprise entre 20cm et 100cm. De préférence encore, l'élément de liaison possède une épaisseur comprise entre 20mm et 70mm. Un tel élément de liaison n'est pas contraint par les dents de la face d'entraînement et permet de tirer avantage de la profondeur des organes de renfort depuis la face produit.

Selon un aspect, la couche inférieure comprend des dents adaptées pour coopérer avec des organes d'entraînement dudit dispositif convoyeur, les organes de renfort longitudinaux sont positionnés au moins partiellement au-dessus des dents. De préférence, les organes de renfort longitudinaux sont plus proches de la face d'entraînement que de la face produit.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'un convoyeur équipée d'une bande sans fin.
La [Fig.2] est une représentation schématique de dessus d'une bande linéaire selon l'art antérieur.
La [Fig.3] est une représentation schématique en coupe transversale d'une bande linéaire selon l'art antérieur à plat.
La [Fig.4] est une représentation schématique en coupe transversale de la bande de la [Fig.3] en position tubulaire.
La [Fig.5] est une représentation schématique rapprochée des organes de renfort de la [Fig.3].
La [Fig.6] est une représentation schématique d'une étape de formation d'évidements dans la bande linéaire selon l'art antérieur.
La [Fig.7] est une représentation schématique d'une étape de positionnement d'éléments de liaison selon l'art antérieur.
La [Fig.8] est une représentation schématique en coupe transversale d'une zone de jonction d'une bande sans fin selon l'art antérieur.
La [Fig.9] est une représentation schématique d'une bande linéaire selon l'invention avant sa jonction.

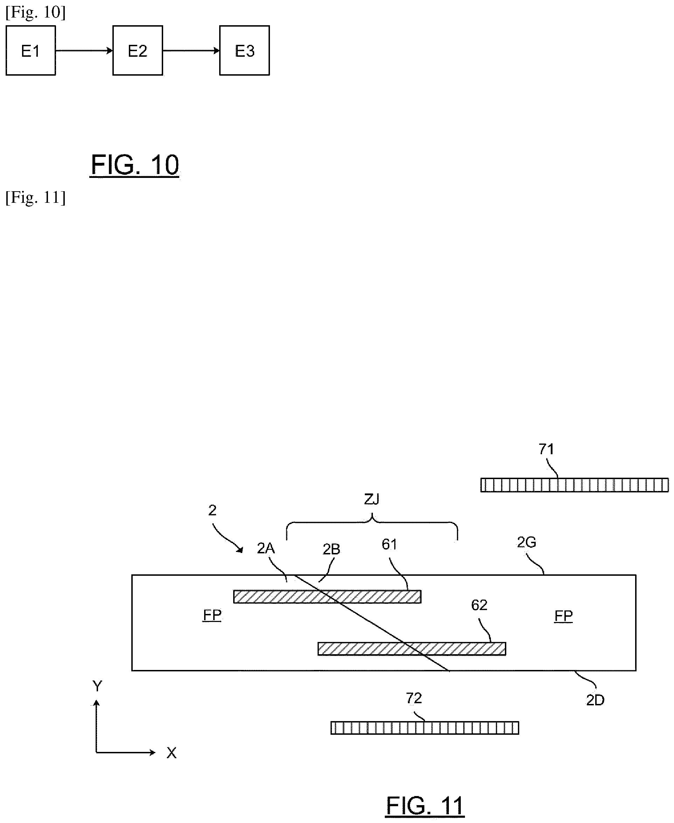

La [Fig.10] est une représentation schématique des étapes de mise en oeuvre d'une méthode de jonction selon l'invention.
La [Fig.11] est une représentation schématique d'une étape de formation d'évidements dans la bande linéaire selon l'invention.

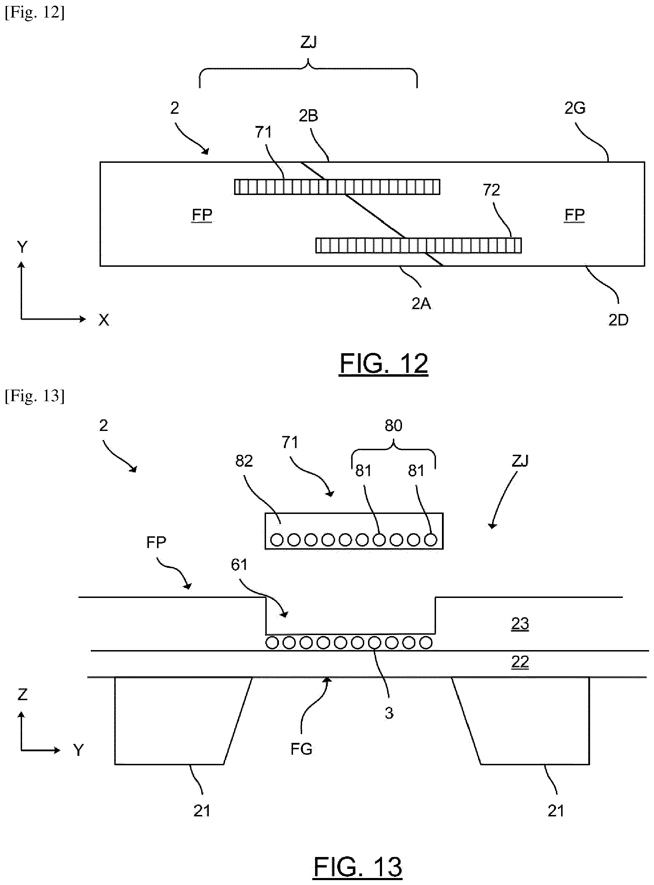

La [Fig.12] est une représentation schématique d'une étape de positionnement d'éléments de liaison dans les évidements selon l'invention.
La [Fig.13] est une représentation schématique en coupe transversale d'une étape de positionnement d'un premier élément de liaison dans un premier évidement global selon l'invention.

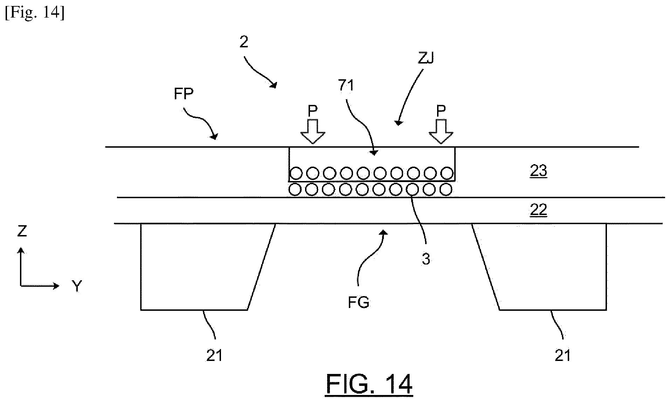

La [Fig.14] est une représentation schématique en coupe transversale d'une bande sans fin après sa jonction.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

Une méthode de fabrication d'une bande sans fin BSF selon l'invention à partir d'une bande linéaire 2 va être dorénavant présentée.

Une telle bande sans fin BSF est destinée à être utilisée dans un convoyeur 1 tel que présenté précédemment dans le préambule. Comme illustré à la [Fig.1], le convoyeur 1 comprend de manière classique une entrée basse 1A, une partie ascendante 1B et une sortie haute 1C. Le convoyeur 1 comprend des organes d'entraînement 11, en particulier des roues dentées, pour permettre l'entrainement de la bande sans fin BSF.

Comme présenté précédemment, pour fabriquer une bande sans fin BSF, on dispose d'une bande linéaire 2 qui est, de préférence, conditionnée en rouleau. La bande linéaire 2 est analogue à l'art antérieur (à l'exception de ses extrémités longitudinales comme cela sera présenté par la suite). Par souci de clarté et de concision, il sera fait référence à la description du préambule et aux dessins du préambule de nouveau dans la description détaillée.

Comme expliqué précédemment, de manière connue, en référence à la [Fig.9], la bande linéaire 2 s'étend longitudinalement selon un axe X, latéralement selon un axe Y et verticalement selon un axe Z. La bande linéaire comporte deux bords latéraux 2G, 2D et deux extrémités longitudinales 2A, 2B. De manière préférée, la bande possède une largeur comprise entre 300 mm et 400 mm, de préférence, de l'ordre de 350 mm afin d'être adaptée au domaine agro-alimentaire.

La bande 2 comprend de manière connue une face de dessus, désignée « face produit » FP, destinée à être en contact avec les denrées alimentaires, et une face de dessous, dite « face d'entraînement » FG, destinée à être en contact avec des organes d'entrainements 11 du convoyeur 1. A cet effet, la face d'entraînement FG comporte des dents 21 pour coopérer avec les organes d'entrainements 11 du convoyeur 1. De manière connue, comme expliqué précédemment, la bande linéaire 2 est déformable transversalement entre une position plane et une position tubulaire.

De manière analogue à précédemment, en référence aux figures 2 et 3, afin de permettre une déformation tubulaire optimale, la bande linéaire 2 comporte au moins deux couches superposées 22, 23 ayant des duretés différentes. La face produit FP appartient de manière connue à une couche supérieure 23 formée dans un matériau présentant une dureté faible, lui conférant une meilleure adhérence, ce qui est favorable au transport de produits. Le matériau est de préférence souple pour former plus aisément la bande linéaire 2 dans sa configuration tubulaire, sans introduire des contraintes trop importantes dans la bande linéaire 2. La face d'entraînement FG appartient de manière connue à une couche inférieure 22 formée dans un matériau présentant une dureté plus élevée, de manière à augmenter sa durée de vie en limitant les frottements lors de sa coopération avec les organes d'entraînement 11 du convoyeur 1. Les couches 22, 23, de duretés différentes, peuvent être réalisées dans un même matériau ou dans des matériaux différents, l'important étant de conserver une liaison optimale entre les matériaux. A titre d'exemple, les couches 22, 23 peuvent être réalisées en élastomère type polyuréthane, de manière à permettre sa déformation dans une direction transversale par rapport à sa longueur, en particulier pour permettre sa mise en configuration tubulaire.

A titre d'exemple, la couche inférieure 22, de dureté élevée, possède une dureté comprise entre 52 shore D et 55 shore D, de préférence de l'ordre de 54 shore D. A titre d'exemple, la couche supérieure 23, de dureté faible, possède une dureté comprise entre 70 shore A et 85 shore A, de préférence de l'ordre de 70 shore A. Les échelles de dureté sont connues de l'homme du métier et notamment décrites dans les normes ISO868, ASTMD 2240, DIN 535050. Dans cet exemple, il est présenté uniquement deux couches mais il va de soi que la bande linéaire 2 pourrait en comprendre plus de deux, notamment, trois.

Selon un aspect préféré de l'invention, la couche supérieure 23 définit une face produit FP qui est plane, c'est-à-dire, dépourvue de relief, ce qui permet son nettoyage pratique par raclage. Selon un autre aspect de l'invention non représenté, la bande linéaire 2 comporte des bords longitudinaux épaissis comme enseigné par la demande de brevet FR3092573A1, de préférence, formés sur la couche supérieure 23 de dureté plus faible.

Comme illustré à la [Fig.9], la couche inférieure 22 comporte avantageusement des évidements d'assouplissement 24 qui permettent de diminuer la résistance aux déformations longitudinales de la bande transporteuse 2. De tels évidements d'assouplissement 24 sont connus par la demande de brevet FR2933964A1. D'autres variantes de réalisation peuvent être dépourvues de tels évidements d'assouplissement 24.

Dans cet exemple de mise en oeuvre, la couche inférieure 22 comporte des dents 21 en saillie du côté de la face d'entraînement FG adaptées pour coopérer avec des organes d'entraînement 11 du convoyeur 1. En référence à la [Fig.9], les dents 21 sont agencées sur des lignes latérales régulièrement espacées. Les dents 21 sont au nombre de quatre sur chaque ligne transversale, positionnés par couple de deux symétriquement de part et d'autre d'un axe médian de la bande linéaire 2. De préférence dans une telle configuration, chaque couple de dents 21 est positionné au niveau de la fibre neutre. Il va de soi que le nombre de dents 21 sur une ligne latérale pourrait être différent, en particulier, égal à 2.

Comme présenté préalablement, pour permettre de reprendre de manière optimale les efforts longitudinaux lors de son entrainement, la bande linéaire 2 intègre dans son épaisseur une pluralité d'organes de renfort longitudinaux 31, 32 (câbles, sangles plates, etc.). En pratique, les organes de renfort 31, 32 sont intégrés à la couche supérieure 23 de dureté faible, c'est-à-dire, du côté de la face produit FP. Dans cet exemple, les organes de renfort longitudinaux 31, 32 sont plus proches de la face d'entraînement FG que de la face produit FP. Les organes de renfort longitudinaux 31, 32 se présentent de manière préférée sous la forme de fibres d'aramide.

Dans cet exemple, comme illustré à la [Fig.3], la bande linéaire 2 comporte deux groupes d'organes de renfort longitudinaux 31, 32 qui sont écartés latéralement. Le nombre d'organes de renfort 31, 32 par groupe peut varier mais est de préférence compris entre 5 et 20. De préférence, les organes de renfort 31, 32 suivent la fibre neutre de la bande sans fin BSF en configuration tubulaire et permettent d'améliorer sa résistance mécanique. Dans le cas d'une bande linéaire 2 comprenant quatre dents 21 sur chaque ligne transversale, c'est à dire comprenant deux couples de dents 21, chaque groupe d'organes de renfort 31, 32 est de préférence positionné au voisinage d'un couple de dents 21, en particulier, entre les dents 21 comme illustré à la [Fig.5]. La bande linéaire 2 est connue de l'homme du métier et ne sera pas présentée plus en détails.

De manière préalable à sa jonction, la bande linéaire 2 est coupée à la longueur désirée afin de former la bande sans fin BSF qui soit adaptée au convoyeur 1. Selon un aspect préféré de l'invention, comme illustré à la [Fig.9], les extrémités longitudinales 2A, 2B sont biseautées selon un angle de biseau θ qui est compris entre 30 et 60°, de préférence de l'ordre de 45° de manière à permettre la répartition des efforts sur une zone de jonction ZJ comme illustré à la [Fig.12]. De manière préférée, la zone de jonction ZJ possède une longueur comprise entre 20cm et 100cm pour une bande de 35cm de large. De manière préférée, l'angle de biseau θ est déterminé pour permettre de passer entre les dents 21. Autrement dit, les dents 21 ne sont pas impactées par la découpe, ce qui évite de perturber l'entrainement et facilite la découpe.

Un exemple de mise en oeuvre d'une méthode de jonction selon l'invention va être dorénavant présentée en référence à la [Fig.10] qui représente de manière schématique différentes étapes.

En référence à la [Fig.11], la méthode de jonction comprend une étape E1 d'aboutement des extrémités longitudinales 2A, 2B de la bande linéaire 2 et de solidarisation. De manière préférée, l'étape de solidarisation est réalisée par soudage. Chaque extrémité de la bande longitudinale 2A, 2B de la bande linéaire 2 est chauffée puis les extrémités longitudinales 2A, 2B sont mises en contact afin de former une boucle.

En référence à la [Fig.11], la méthode de jonction comprend une étape E2 de formation d'évidements 61, 62 entre la première extrémité longitudinale 2A et la deuxième extrémité longitudinale 2B de la bande linéaire 2 de manière à découvrir les organes de renfort 31, 32.

Dans cet exemple, chaque évidement 61, 62 possède une longueur comprise entre 20cm et 100cm de manière à former une liaison suffisamment robuste. De préférence, chaque évidement 61, 62 possède une épaisseur comprise entre 20mm et 70mm de manière à découvrir les organes de renfort 31, 32 et assurer une liaison robuste comme cela sera présenté par la suite.

Contrairement à l'art antérieur, les évidements 61, 62 sont formés dans la face produit FP de la bande linéaire 2 de manière à éviter tout décollement des éléments de liaison 71, 72 comme cela sera présenté par la suite.

De manière préférée, au cours des étapes de formation des évidements 61, 62, la matière de la couche supérieure 23 est retirée par fraisage. La couche supérieure 23 possède une dureté plus faible que la couche inférieure 22. Aussi, pour retirer de manière optimale le matériau de la couche supérieure 23, un dispositif de fraisage commandé, du type commande numérique, est utilisé afin d'obtenir une vitesse de rotation optimale de la fraise, de l'ordre de 3000 tr/min afin d'éviter la formation de défauts (pénétration, formation de dépôts, etc.).

Pour atteindre les organes de renfort 31, 32, les évidements 4 sont plus profonds que dans l'art antérieur étant donné que les organes de renfort 31, 32 sont plus éloignés de la face produit FP que de la face d'entraînement FG.

Comme illustré à la [Fig.12], la méthode comporte une étape de solidarisation E3 d'un élément de liaison 71, 72 dans chaque évidement 61, 62.

En référence à la [Fig.13], il est représenté de manière schématique le premier élément de liaison 71 destiné à être positionné dans la premier évidement global 61. Le deuxième élément de liaison 72 est identique et ne sera pas présenté en détails.

Le premier élément de liaison 71 possède une forme complémentaire à celle du premier évidement global 61, dans cet exemple, une forme de pavé. De manière avantageuse, le premier élément de liaison 71 est plus épais que dans l'art antérieur et, de préférence, plus large. En effet, sa largeur n'est plus contrainte par l'écartement des dents 21 comme dans l'art antérieur.

En référence à la [Fig.13], le premier élément de liaison 71 comporte une pluralité d'organes de renfort complémentaires 81, de préférence, un nombre sensiblement égal aux organes de renfort 31 découverts par le premier évidement global 61. Les organes de renfort complémentaires 81 sont noyés dans un matériau 80 qui est analogue, de préférence identique, à celui de la couche supérieure 23. Autrement dit, le matériau 80 du premier élément de liaison 71 possède une dureté faible. Les organes de renfort complémentaires 81 sont de préférence situés dans une partie inférieure du premier élément de liaison 71 de manière à être adjacents aux organes de renfort intégrés 31 et ainsi permettre une continuité dans la reprise des efforts de traction sans créer une rigidité longitudinale trop importante. Le matériau 80 du premier élément de liaison 71 est de préférence thermosoudable.

Pour permettre une solidarisation optimale, les éléments de liaison 71, 72 sont chauffés de manière à faire fondre partiellement le matériau 80 qui enrobe les organes de renfort complémentaires 81. Puis, en référence à la [Fig.14], chaque élément de liaison chauffé 71, 72 est positionné dans son évidement 61, 62 puis pressé dans ce dernier afin de permettre au matériau 80 de fusionner avec la couche supérieure 23, ce qui permet une liaison optimale. Du fait de son épaisseur et de sa largeur plus importante, chaque élément de liaison 71, 72 possède une surface de liaison plus grande, ce qui améliore la liaison. En outre, comme illustré à la [Fig.14], l'application d'une pression P sur la face de produit FP au niveau du premier élément de liaison 71 permet d'assurer des conditions de soudure optimale et un état de surface exemplaire, la surface de produit FP demeurant lisse malgré la jonction.

Grâce à l'invention, la bande sans fin BSF possède une résistance plus élevée. Du fait de son positionnement sur la face produit FP, chaque élément de liaison 71, 72 subit de manière avantageuse des efforts d'arrachement moindres que dans l'art antérieur. Le positionnement des organes de renfort 31, 32 peut avantageusement être rendu indépendant du positionnement et de la forme des dents 21, ce qui facilite la conception.

## Revendications

1. Méthode de jonction des extrémités longitudinales (2A, 2B) d'une bande linéaire (2) afin de former une bande sans fin (BSF) configurée pour être montée dans un convoyeur (1) de transport ascendant de denrées alimentaires,
• la bande linéaire (2) comprenant deux bords latéraux (2G, 2D), deux extrémités longitudinales (2A, 2B), une face de dessus destinée à recevoir des denrées alimentaires à transporter, désignée par la suite face produit (FP), et une face de dessous opposée, destinée à coopérer avec des moyens d'entraînement (11) du convoyeur (1), désignée par la suite face d'entraînement (FG),
• la bande linéaire (2) étant déformable transversalement entre une configuration plane, au repos, et une configuration tubulaire ou au moins sensiblement tubulaire, dans laquelle les deux bords latéraux (2D, 2G) sont positionnés bord à bord,
• la bande linéaire (2) comprenant une couche supérieure (23) réalisée en un matériau présentant une première dureté et formant ladite face produit (FP), et une couche inférieure (22) réalisée en un matériau présentant une deuxième dureté, supérieure à la première dureté, et formant ladite face d'entraînement (FG),
• la bande linéaire (2) comprenant une pluralité d'organes de renfort longitudinaux (31, 32), disposés dans son épaisseur, adaptés pour limiter son allongement longitudinal au cours de son utilisation,
• méthode de jonction **caractérisée en ce qu'**elle comprend des étapes de :
• Solidarisation des extrémités longitudinales (2A, 2B) de la bande linéaire (2),
• Formation d'au moins un évidement (61, 62) dans la première extrémité longitudinale (2A) et dans la deuxième extrémité longitudinale (2B) de la bande linéaire (2) de manière à découvrir au moins un organe de renfort (31, 32), l'évidement (61, 62) étant formé depuis la face produit (FP) de la bande linéaire (2),
• Solidarisation d'un élément de liaison (71, 72) dans l'évidement (61, 62), l'élément de liaison (71, 72) comportant des organes de renfort complémentaires (81) et étant de forme complémentaire audit évidement (61,62).

2. Méthode selon la revendication 1, dans laquelle les extrémités longitudinales (2A, 2B) sont biseautées, de préférence, d'un angle de biseautage (θ) compris entre 30° et 60°.

3. Méthode selon l'une des revendications 1 à 2, dans laquelle l'élément de liaison (71, 72) est solidarisé audit évidement (61, 62) par chauffage.

4. Méthode selon la revendication 3, comprenant une étape de pression de l'élément de liaison (71, 72) dans ledit évidement (61, 62) postérieure à l'étape de chauffage.

5. Méthode selon l'une des revendications 1 à 4, dans laquelle les organes de renfort longitudinaux (31, 32) sont positionnés dans la couche supérieure (23).

6. Méthode selon l'une des revendications 1 à 5, dans laquelle la bande linéaire (2) comporte au moins deux groupes d'organes de renfort longitudinaux (31, 32), de préférence, uniquement deux.

7. Méthode selon la revendication 6, comprenant une étape de formation de deux évidements (61, 62) pour découvrir les deux groupes d'organes de renfort longitudinaux (31, 32).

8. Méthode selon l'une des revendications 1 à 7, dans laquelle l'élément de liaison (71, 72) comporte des organes de renfort complémentaires (81) noyés dans un matériau (80) analogue à celui de la couche supérieure (23).

9. Méthode selon l'une des revendications 1 à 8, dans laquelle l'élément de liaison (71, 72) possède une longueur comprise entre 20cm et 100cm.

10. Méthode selon l'une des revendications 1 à 9, dans laquelle l'élément de liaison (71, 72) possède une épaisseur comprise entre 20mm et 70mm.

11. Méthode selon l'une des revendications 1 à 10, dans laquelle la couche inférieure (22) comprend des dents (21) adaptées pour coopérer avec des organes d'entraînement (11) dudit dispositif convoyeur (1), les organes de renfort longitudinaux (31, 32) sont positionnés au moins partiellement au-dessus des dents (21).

12. Méthode selon l'une des revendications 1 à 11, dans laquelle les organes de renfort longitudinaux (31, 32) sont plus proches de la face d'entraînement (FG) que de la face produit (FP).

## Patentansprüche

1. Verfahren zum Verbinden der Längsenden (2A, 2B) eines linearen Bandes (2), um ein Endlosband (BSF) zu bilden, das so konfiguriert ist, dass es in einem Förderer (1) für den Aufwärtstransport von Lebensmitteln montiert werden kann,
• das lineare Band (2) zwei Seitenkanten (2G, 2D), zwei Längsenden (2A, 2B), eine Oberseite, die dazu bestimmt ist, zu transportierende Lebensmittel aufzunehmen, im Folgenden als Produktseite (FP) bezeichnet, und eine gegenüberliegende Unterseite, die dazu bestimmt ist, mit Antriebsmitteln (11) des Förderers (1) zusammenzuwirken, im Folgenden als Antriebsseite (FG) bezeichnet, umfasst,
• wobei das lineare Band (2) in Querrichtung zwischen einer ebenen, ruhenden Konfiguration und einer röhrenförmigen oder zumindest im Wesentlichen röhrenförmigen Konfiguration verformbar ist, in der die beiden Seitenkanten (2D, 2G) Kante an Kante positioniert sind,
• das lineare Band (2) eine obere Schicht (23) hat, die aus einem Material mit einer ersten Härte hergestellt ist und die Produktseite (FP) bildet, und eine untere Schicht (22) umfasst, die aus einem Material mit einer zweiten Härte, die größer als die erste Härte ist, hergestellt ist und die Antriebsseite (FG) bildet,
• das lineare Band (2) eine Vielzahl von Verstärkungsteilen (31, 32) in Längsrichtung umfasst, die in seiner Dicke angeordnet sind und so beschaffen sind, dass sie seine Längsdehnung während der Verwendung begrenzen,
• Fügeverfahren, **dadurch gekennzeichnet, dass** es die folgenden Schritte umfasst:
• Festlegen der Längsenden (2A, 2B) des linearen Bandes (2),
• Bildung mindestens einer Aussparung (61, 62) in dem ersten Längsende (2A) und in dem zweiten Längsende (2B) des linearen Bandes (2), um mindestens ein Verstärkungsteil (31, 32) freizulegen, wobei die Aussparung (61, 62) von der Produktseite (FP) des linearen Bandes (2) ausgebildet wird,
• Festlegen eines Verbindungsteils (71, 72) in der Aussparung (61, 62), wobei das Verbindungsteil (71, 72) komplementäre Verstärkungsteile (81) aufweist und eine zu der Aussparung (61, 62) komplementäre Form hat.

2. Verfahren nach Anspruch 1, bei dem die Längsenden (2A, 2B) abgeschrägt sind, vorzugsweise um einen Abschrägungswinkel (θ) zwischen 30° und 60°.

3. Verfahren nach einem der Ansprüche 1 bis 2, bei dem das Verbindungsteil (71, 72) durch Erhitzen fest mit der Aussparung (61,62).

4. Verfahren nach Anspruch 3, umfassend einen Schritt des Pressens des Verbindungsteils (71, 72) in die Aussparung (61, 62) nach dem Erwärmungsschritt.

5. Verfahren nach einem der Ansprüche 1 bis 4, bei dem die Verstärkungsteile (31, 32) in Längsrichtung in der oberen Schicht (23) positioniert werden.

6. Verfahren nach einem der Ansprüche 1 bis 5, bei dem das lineare Band (2) mindestens zwei Gruppen von Verstärkungselementen (31, 32) in Längsrichtung aufweist, vorzugsweise nur zwei.

7. Verfahren nach Anspruch 6, das einen Schritt umfasst, bei dem zwei Aussparungen (61, 62) gebildet werden, um die beiden Gruppen von Verstärkungselementen (31, 32) in Längsrichtung freizulegen.

8. Verfahren nach einem der Ansprüche 1 bis 7, bei dem das Verbindungsteil (71, 72) komplementäre Verstärkungsteile (81) aufweist, die in einem Material (80) eingebettet sind, das dem der oberen Schicht (23) ähnlich ist.

9. Verfahren nach einem der Ansprüche 1 bis 8, wobei das Verbindungsteil (71, 72) eine Länge zwischen 20 cm und 100 cm hat.

10. Verfahren nach einem der Ansprüche 1 bis 9, wobei das Verbindungsteil (71, 72) eine Dicke zwischen 20 mm und 70 mm hat.

11. Verfahren nach einem der Ansprüche 1 bis 10, bei dem die untere Schicht (22) Zähne (21) umfasst, die geeignet sind, mit Antriebsteilen (11) des Förderers (1) zusammenzuwirken, wobei die Verstärkungsteile (31, 32) in Längsrichtung zumindest teilweise über den Zähnen (21) positioniert sind.

12. Verfahren nach einem der Ansprüche 1 bis 11, bei dem die Verstärkungsteile (31, 32) in Längsrichtung näher an der Antriebsseite (FG) als an der Produktseite (FP) liegen.

## Claims

1. Method of joining the longitudinal ends (2A, 2B) of a linear belt (2) to form an endless belt (BSF) configured to be mounted in an ascending conveyor (1) for transporting foodstuffs,
- the linear belt (2) comprising two lateral edges (2G, 2D), two longitudinal ends (2A, 2B), a top face intended to receive foodstuffs to be transported, hereinafter referred to as the product face (FP), and an opposite bottom face, intended to cooperate with conveyor drive means (11), hereinafter referred to as the drive face (FG),
- the linear belt (2) being deformable transversely between a flat configuration, at rest, and a tubular or at least substantially tubular configuration, wherein the two lateral edges (2D, 2G) are positioned edge to edge,
- the linear belt (2) comprising an upper layer (23) made of a material having a first hardness and forming said product face (FP), and a lower layer (22) made of a material having a second hardness, greater than the first hardness, and forming said drive face (FG),
- the linear belt (2) comprising a plurality of longitudinal reinforcing members (31, 32), arranged in its thickness, adapted to limit its longitudinal elongation during the use thereof,
- method for joining **characterizing in that** it includes the steps of:
- Rigidly connecting the longitudinal ends (2A, 2B) of the linear belt (2),
- Forming at least one recess (61, 62) in the first longitudinal end (2A) and in the second longitudinal end (2B) of the linear belt (2) so as to uncover at least one reinforcing member (31, 32), the recess (61, 62) being formed from the product face (FP) of the linear belt (2).
- Rigid connecting of a connecting element (71, 72) in the recess (61, 62), the connecting element (71, 72) comprising additional reinforcing members (81) and having a shape complementary to said recess (61, 62),

2. Method according to claim 1, wherein the longitudinal ends (2A, 2B) are beveled, preferably with a bevel angle (θ) of between 30° and 60°.

3. Method according to one of claims 1 to 2, wherein the connecting element (71, 72) is rigidly connectect to said recess (61, 62) by heating.

4. Method according to claim 3, comprising a step of pressing the connecting element (71, 72) into said recess (61, 62) after the heating step.

5. Method according to one of claims 1 to 4, wherein the longitudinal reinforcing members (31, 32) are positioned in the upper layer (23).

6. Method according to one of claims 1 to 5, wherein the linear belt (2) comprises at least two groups of longitudinal reinforcing members (31, 32), preferably, only two.

7. Method according to claim 6, comprising a step of forming two recesses (61, 62) to uncover the two groups of longitudinal reinforcing members (31, 32).

8. Method according to one of claims 1 to 7, wherein the connecting element (71, 72) comprises additional reinforcing members (81) embedded in a material (80) similar to that of the upper layer (23).

9. Method according to one of claims 1 to 8, wherein the connecting element (71, 72) has a length of between 20 cm and 100 cm.

10. Method according to one of claims 1 to 9, wherein the connecting element (71, 72) has a thickness of between 20 mm and 70 mm.

11. Method according to one of claims 1 to 10, wherein the lower layer (22) comprises teeth (21) adapted to cooperate with drive members (11) of said conveyor device (1), the longitudinal reinforcing members (31, 32) are positioned at least partially above the teeth (21).

12. Method according to one of claims 1 to 11, wherein the longitudinal reinforcing members (31, 32) are closer to the drive face (FG) than to the product face (FP).
